(19) Europäisches Patentamt
European Patent Office
Office européen des brevets

(11) **EP 4 597 033 A1**

(12) **EUROPEAN PATENT APPLICATION**
published in accordance with Art. 153(4) EPC

(43) Date of publication:
**06.08.2025 Bulletin 2025/32**

(21) Application number: **23872226.8**

(22) Date of filing: **25.09.2023**

(51) International Patent Classification (IPC):
*G01C 9/06* (2006.01)   *G01C 15/00* (2006.01)
*G01C 19/00* (2013.01)   *G01B 7/30* (2006.01)

(52) Cooperative Patent Classification (CPC):
**G01B 7/30; G01C 9/06; G01C 15/00; G01C 19/00**

(86) International application number:
**PCT/JP2023/034633**

(87) International publication number:
**WO 2024/071001 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 JP 2022156074**

(71) Applicant: **TOPCON CORPORATION**
**Tokyo 174-8580 (JP)**

(72) Inventors:
• **OHTOMO, Fumio**
  **Asaka-shi, Saitama 351-0035 (JP)**
• **OSARAGI, Kazuki**
  **Tokyo 174-8580 (JP)**
• **MATSUMOTO, Hideyuki**
  **Tokyo 174-8580 (JP)**
• **KUMAGAI, Kaoru**
  **Tokyo 174-8580 (JP)**
• **SHOJI, Naoki**
  **Tokyo 174-8580 (JP)**

(74) Representative: **Louis Pöhlau Lohrentz**
**Patentanwälte**
**Merianstrasse 26**
**90409 Nürnberg (DE)**

(54) **ROTARY OPERATION-TYPE INERTIA DETECTION DEVICE AND SURVEYING DEVICE**

(57)     A rotational operation type inertia detecting device includes an inner frame (3) in which an inertial sensor unit (4) is provided and which is rotatably supported to an outer frame (2), a twin inertial sensor unit including two inertial sensors, a first encoder (12) for detecting a rotation angle between the outer frame and the inner frame, and a second encoder (17) for detecting a rotation angle between the inner frame and the twin inertial sensor unit, wherein the inertia detecting device is configured to associate a signal output by the twin inertial sensor unit with outputs of the first encoder and the second encoder, to continuously rotate the twin inertial sensor unit, to calculate a horizontal rotation angle of the inner frame and a rotation angle with respect to horizontality from a detection signal of the twin inertial sensor unit based on an angle of the second encoder, to reverse the inner frame at least once by 180° or one rotation, and to detect a vertical angle and a horizontal rotation angle with respect to verticality of the outer frame.

FIG.1

## Description

TECHNICAL FIELD

The present invention relates to a rotational operation type inertia detecting device using a plurality of inertial sensors, and a surveying instrument including the rotational operation type inertia detecting device.

BACKGROUND ART

A tilt detection device is provided in a surveying instrument to level the instrument or to measure a tilt of the instrument.

There are tilt sensors which use a tilt of a free liquid level or motion of air bubbles enclosed in a liquid as a tilt detection device for detecting high precise horizontality and minute tilt. Alternatively, there are acceleration sensors as a tilt detection device for detecting dynamic tilt with high responsiveness.

Tilt sensors have detected horizontality with high precision, but have exhibited poor responsiveness and have been difficult to be used for dynamic instruments. Further, recent acceleration sensors have been composed of a Micro Electro Mechanical System (MEMS) and have guaranteed high responsiveness, but the acceleration sensors have had problems of lack of stability due to a drift caused by environmental changes (temperature, atmospheric pressure, humidity, and the like) or temporal changes.

On the other hand, recently, there have been also gyro sensors composed of MEMS and there are also sensors formed by integrating a gyro sensor and an acceleration sensor. Similar to acceleration sensors, the gyro sensors for detecting rotation also have a problem of lack of stability due to manufacturing offsets and due to a drift caused by environmental changes (temperature, atmospheric pressure, humidity, and the like), or temporal change.

PRIOR ART REFERENCES

PATENT DOCUMENT

Patent Document 1: Patent Publication JP-B2-6541365

Patent Document 2: Patent Publication JP-A-2016-151423

Patent Document 3: Patent Publication JP-A-2017-090244

Patent Document 4: Patent Publication JP-A-2017-106813

Patent Document 5: Patent Publication JP-A-2018-028464

Patent Document 6: Patent Publication JP-A-2021-050991

SUMMARY OF THE INVENTION

PROBLEM TO BE SOLVED BY THE INVENTION

It is an object of the present invention to provide a rotational operation type inertia detecting device and a surveying instrument including the rotational operation type inertia detecting device, capable of eliminating offset or drift of inertial sensors, such as an acceleration sensor or a gyro sensor and of guaranteeing stability, without being affected by a rotation mechanism.

MEANS FOR SOLVING THE PROBLEM

The present invention relates to a rotational operation type inertia detecting device which comprises an inner frame provided inside an outer frame, an inertial sensor unit configured to detect a tilt with respect to horizontality and a rotation provided inside the inner frame, wherein the inner frame is rotatably supported to the outer frame via a first shaft, the inertial sensor unit is rotatably supported to the inner frame via a second shaft orthogonal to the first shaft, the inertial sensor unit is a twin inertial sensor unit including two inertial sensors, and the two inertial sensors face each other at a predetermined angle with respect to the second shaft, a first encoder provided on the first shaft and configured to detect a rotation angle between the outer frame and the inner frame, a second encoder provided on the second shaft and configured to detect a rotation angle between the inner frame and the twin inertial sensor unit, a rotary power provided for each shaft so as to rotate each shaft, and an arithmetic processing module configured to drive and control the each rotary power based on a detection result from the twin inertial sensor unit, wherein the arithmetic processing module is configured to associate a signal output by the twin inertial sensor unit with outputs of the first encoder and the second encoder, to continuously rotate the twin inertial sensor unit with respect to the second shaft, to calculate a horizontal rotation angle of the inner frame and a rotation angle with respect to horizontality of the second shaft from a detection signal of the twin inertial sensor unit based on an angle of the second encoder, to reverse the inner frame at least once by 180° or one rotation with respect to the first shaft, and to detect a tilt angle (vertical angle) and a horizontal rotation angle with respect to verticality of the outer frame.

Further, the present invention relates to the rotational operation type inertia detecting device, wherein the arithmetic processing module is configured to control the rotary power provided on the first shaft such that the inner frame becomes horizontal based on a detection signal of the twin inertial sensor unit.

Further, the present invention relates to the rotational operation type inertia detecting device, wherein the rotational operation type inertia detecting device is configured to reverse the inner frame at least once by 180° or one rotation with regard to the first shaft while the outer frame is in a stationary state or a constant velocity state, to detect a vertical angle and a horizontal rotation angle based on detection signals output by the twin inertial sensor unit before and after reversal, and when the outer frame is moving, to calculate a vertical angle and a horizontal rotation angle according to changes of rotation detection results of the twin inertial sensor unit with reference to the vertical angle and the horizontal rotation angle.

Further, the present invention relates to the rotational operation type inertia detecting device, wherein the inertial sensor unit includes a plurality of the twin inertial sensor units, and the arithmetic processing module is configured to perform average processing of results acquired by each twin inertial sensor unit.

Furthermore, the present invention relates to a surveying instrument which comprises any one of the above-described rotational operation type inertia detecting device, a distance measuring module configured to perform electronic distance measurement, an optical axis deflector configured to deflect a distance measuring optical axis and to direct a distance measuring light to a measuring point, and a measuring direction detector configured to detect a direction of the distance measuring optical axis, wherein the surveying instrument is configured to calculate a position of the measuring point.

EFFECTS OF THE INVENTION

According to the present invention, a rotational operation type inertia detecting device comprises an inner frame provided inside an outer frame, an inertial sensor unit configured to detect a tilt with respect to horizontality and a rotation provided inside the inner frame, wherein the inner frame is rotatably supported to the outer frame via a first shaft, the inertial sensor unit is rotatably supported to the inner frame via a second shaft orthogonal to the first shaft, the inertial sensor unit is a twin inertial sensor unit including two inertial sensors, and the two inertial sensors face each other at a predetermined angle with respect to the second shaft, a first encoder provided on the first shaft and configured to detect a rotation angle between the outer frame and the inner frame, a second encoder provided on the second shaft and configured to detect a rotation angle between the inner frame and the twin inertial sensor unit, a rotary power provided for each shaft so as to rotate each shaft, and an arithmetic processing module configured to drive and control the each rotary power based on a detection result from the twin inertial sensor unit, wherein the arithmetic processing module is configured to associate a signal output by the twin inertial sensor unit with outputs of the first encoder and the second encoder, to continuously rotate the twin inertial sensor unit with respect to the second shaft, to calculate a horizontal rotation angle of the inner frame and a rotation angle with respect to horizontality of the second shaft from a detection signal of the twin inertial sensor unit based on an angle of the second encoder, to reverse the inner frame at least once by 180° or one rotation with respect to the first shaft, and to detect a tilt angle (vertical angle) and a horizontal rotation angle with respect to verticality of the outer frame. As a result, it is possible to eliminate offset or drift of inertial sensors, without being affected by a rotation mechanism, to eliminate effects of unit assembly errors and rotation irregularities, and to stably detect a tilt and a rotation.

Furthermore, according to the present invention, a surveying instrument comprises any one of the above-described rotational operation type inertia detecting device, a distance measuring module configured to perform electronic distance measurement, an optical axis deflector configured to deflect a distance measuring optical axis and to direct a distance measuring light to a measuring point, and a measuring direction detector configured to detect a direction of the distance measuring optical axis, wherein the surveying instrument is configured to calculate a position of the measuring point. As a result, it is possible to detect a tilt and a rotation angle with respect to horizontal of the surveying instrument with high accuracy and stability.

BRIEF DESCRIPTION OF DRAWINGS

FIG.1 is a schematical plan view diagram showing a rotational operation type inertia detecting device to which embodiments of the present invention are applied.

FIG.2 is a schematical block diagram of the rotational operation type inertia detecting device.

FIG.3 is a schematic diagram of an inertial sensor in the rotational operation type inertia detecting device.

FIG. 4A, FIG. 4B, FIG. 4C, and FIG. 4D are explanatory diagrams showing posture states of an inertial sensor at a time of pitching reversals and at a time of rolling reversals.

FIG.5 is a line diagram showing pitching reversal operations and rolling reversal operations in time series.

FIG.6 is a line diagram showing pitching reversal operations and rolling continuous rotation operations in time series and also showing an output state of an acceleration sensor at a time of rolling continuous rotation operations.

FIG. 7A is a diagram showing relationship between a tilt and a horizontal rotation of an inner frame in a state where a Y-axis of the inner frame is horizontally leveled, and FIG.7B is a diagram showing an example of a vector synthesis of reversal differences $\Delta\kappa$, $\Delta\gamma$ based on a gyro sensor output.

FIG.8A is a diagram showing a twin inertial sensor unit, and FIG.8B and FIG.8C are diagrams respectively showing relationships between a first inertial sensor and a second inertial sensor in a twin inertial sensor unit.

FIG. 9A is a diagram showing a relationship between an output of an acceleration sensor and an output of a gyro sensor respectively built in an first inertial sensor and an second inertial sensor, and FIG.9B is a diagram showing a relationship between a gyro output ($\kappa$a, $\gamma$a) of the first inertial sensor and a gyro output ($\kappa$b, $\gamma$b) of the second inertial sensor, and showing an output of an inertial sensor unit (difference between an output of the first inertial sensor and an output of the second inertial sensor) .

FIG.10 shows a modified example of a twin inertial sensor unit. FIG.10A is a diagram showing a relationship between an output of an acceleration sensor and an output of a gyro sensor respectively built in a first inertial sensor and a second inertial sensor, and FIG.10B is a diagram showing a relationship between a gyro output ($\kappa$a, $\gamma$a) of the first inertial sensor and a gyro output ($\kappa$b, $\gamma$b) of the second inertial sensor, and showing an output of an inertial sensor unit (sum of an output of the first inertial sensor and an output of the second inertial sensor).

FIG.11 is an explanatory drawing of an inertial sensor unit including a plurality of twin inertial sensor units.

FIG.12 is a schematical block diagram of a surveying instrument including a rotational operation type inertia detecting device according to the present embodiment.

## MODE(S) FOR CARRYING OUT THE INVENTION

A description will be given below on embodiments of the present invention by referring to attached drawings.

For convenience of description, before describing a rotational operation type inertia detecting device including a plurality of inertial sensors, a description will be given on a rotational operation type inertia detecting device including a single inertial sensor.

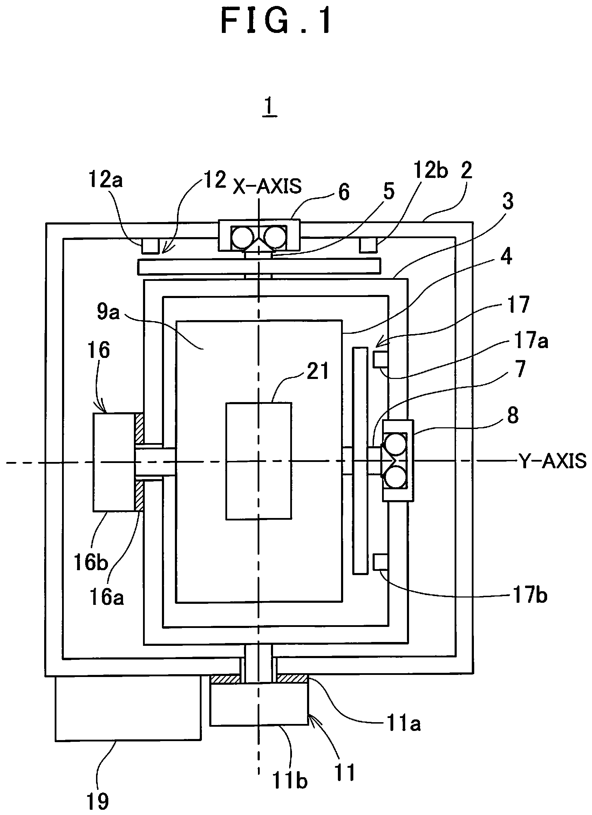

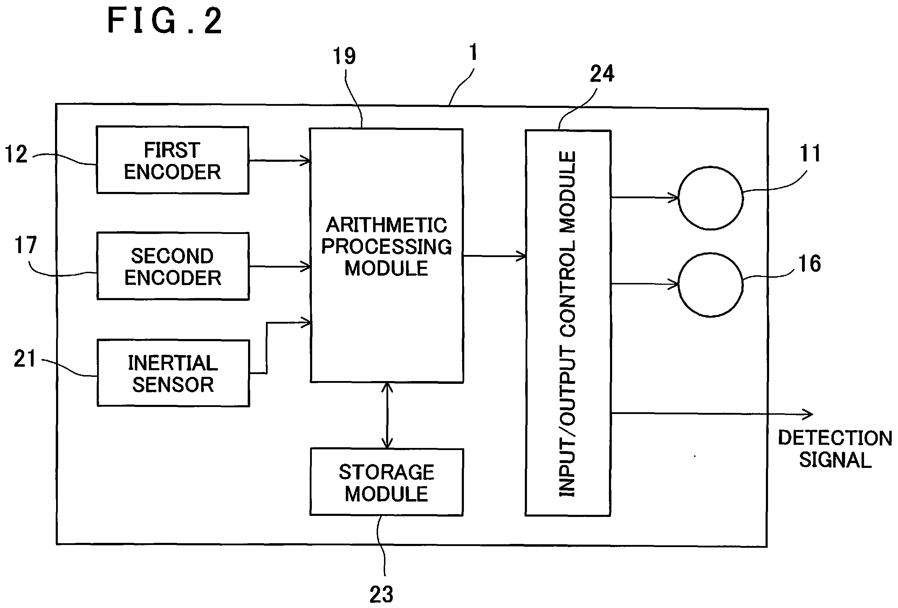

FIG.1 and FIG.2 are schematical diagrams of a rotational operation type inertia detecting device including a single inertial sensor.

FIG.1 is a schematical plan view diagram showing the rotational operation type inertia detecting device 1, and FIG.2 is a schematical block diagram of the rotational operation type inertia detecting device 1. Further, in descriptions with reference to FIG. 1, an upper side of FIG. 1 is described as an upper side of the rotational operation type inertia detecting device 1, and a left side of FIG.1 is described as a left side of the rotational operation type inertia detecting device 1, for convenience.

A rectangular framed-shaped inner frame 3 is provided inside a rectangular framed-shaped outer frame 2, and an inertial sensor unit 4 is provided inside the inner frame 3. The inertial sensor unit 4 includes a sensor base 9a and an inertial sensor 21, and the inertial sensor 21 is attached to the sensor base 9a.

The inertial sensor 21 is an integral-type inertial sensor in which a triaxial acceleration sensor and a gyro sensor are built in as MEMS. Therefore, signals output from the inertial sensor 21 include a detection signal from the triaxial acceleration sensor and a detection signal from the gyro sensor.

When the rotational operation type inertia detecting device 1 is provided in a device (target device) (not shown) of which a tilt is to be detected, the outer frame 2 is attached to a structural member, such as a frame of a target device.

A first shaft 5 is provided in a protruding state from an upper side of the inner frame 3, and a first encoder 12 is provided on the first shaft 5. The first shaft 5 is rotatably supported with respect to the outer frame 2 via a bearing 6 provided in the outer frame 2, and the inner frame 3 is rotatable with respect to the outer frame 2.

A first rotary driving force (hereinafter, referred to as a first motor 11) is provided on a lower side of the outer frame 2.

The first motor 11 is an outer rotor type motor. By fixing an inner part 11a to the outer frame 2, an outer part 11b of the first motor 11 and the first shaft 5 are integrally rotated and by being driven by the first motor 11, the outer frame 2 and the inner frame 3 are relatively rotated.

The first encoder 12 includes two detectors 12a and 12b on right and left in the drawing, and is configured to detect a rotation angle of the inner frame 3 with respect to the outer frame 2 (relative rotation angle between the inner frame 3 and the outer frame 2).

A second shaft 7 is provided in a protruding state from a right side of the inertial sensor unit 4, and a second encoder 17 is provided on the second shaft 7. The second shaft 7 is rotatably supported with respect to the inner frame 3 via a bearing 8 provided in the inner frame 3, and the inertial sensor unit 4 is rotatable around the second shaft 7.

Here, an axis of the first shaft 5 and an axis of the second shaft 7 are configured to be orthogonal to each other. Further, as described later, an axis of the first shaft 5 is an X-axis and an axis of the second shaft 7 is a Y-axis.

A second rotary driving force (hereinafter, referred to as a second motor 16) is provided on a left side of the inner frame 3, and a rotational shaft of the second motor 16 is fixed to a left side of the inertial sensor unit 4.

The second motor 16 is an outer rotor type motor. By fixing an inner part 16a to the inner frame 3, an outer part 16b of the second motor 16 and the second shaft 7 are integrally rotated and by being driven by the second motor 16, the inner frame 3 and the inertial sensor unit 4 are relatively rotated.

The second encoder 17 includes two detectors 17a and 17b on upper and lower sides in the drawing, and is configured to detect a rotation angle of the inertial sensor unit 4 with respect to the inner frame 3 (relative rotation angle between the inertial sensor unit 4 and the inner frame 3).

It is to be noted that, as the first encoder 12 and the second encoder 17, an encoder (angle measuring accuracy: 10" or less) used for angle measurement in general surveying instruments may be used.

Further, a motor used as the first rotary driving force or the second rotary driving force may be a motor of a type in which a rotational shaft rotates with respect to a motor body, and may be enough to generate relative rotation respectively between the outer frame 2 and the inner frame 3 and between the inner frame 3 and the inertial sensor unit 4.

The first encoder 12 and the second encoder 17 are electrically connected to an arithmetic processing module 19, and the first encoder 12 and the second encoder 17 output detection results to the arithmetic processing module 19.

The inertial sensor 21 is electrically connected to the arithmetic processing module 19. As described above, the inertial sensor 21 has the acceleration sensor and the gyro sensor built in, and signals output by the inertial sensor 21 include an acceleration detection signal from the acceleration sensor and an angular velocity detection signal from the gyro sensor and are respectively input into the arithmetic processing module 19 as detection signals of the inertial sensor 21. The arithmetic processing module 19 associates outputs of the first encoder 12 and the second encoder 17 with signals which the inertial sensor 21 outputs.

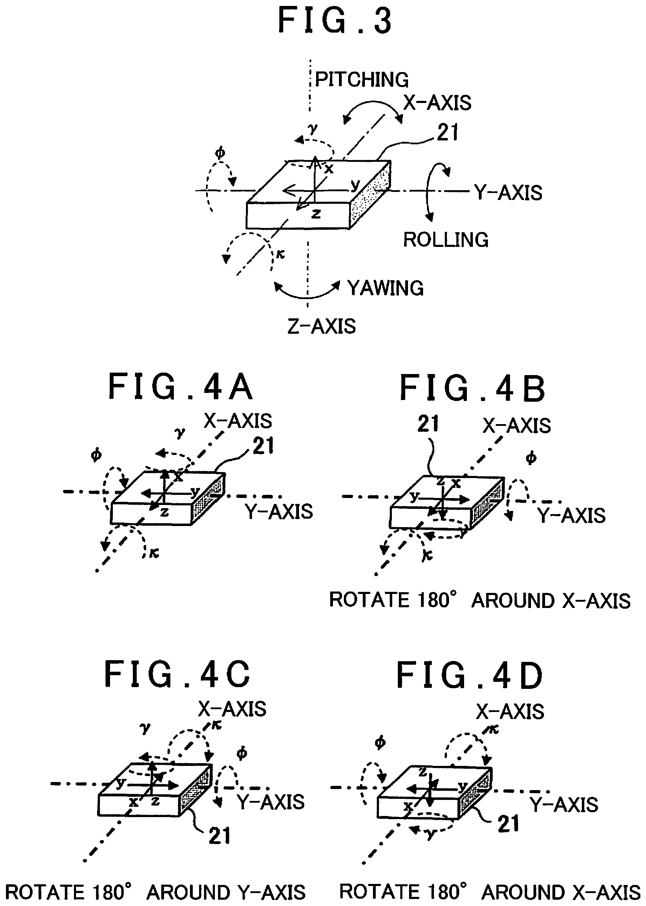

The acceleration sensor of the inertial sensor 21 is configured to detect accelerations in total of three axial directions, that is, accelerations of two horizontal axes (X-axis and Y-axis) orthogonal to each other and an acceleration of one vertical axis (Z-axis (see FIG.3)) orthogonal to the two horizontal axes (vertical to the drawing sheet) and to output an acceleration signal in each three axial directions.

The gyro sensor of the inertial sensor 21 is configured to detect angular velocities regarding the two horizontal axes (X-axis and Y-axis) and an angular velocity regarding the vertical axis (Z-axis) orthogonal to the two horizontal axes (vertical to the drawing sheet).

Here, two horizontal axes correspond to the first shaft 5 and the second shaft 7 shown in FIG.1. A rotation (tilt) around the first shaft 5 corresponds to pitching, a rotation (tilt) around the second shaft 7 corresponds to rolling, and a rotation around the vertical axis corresponds to yawing.

A description will be further given on the rotational operation type inertia detecting device 1 by referring to FIG.2.

The rotational operation type inertia detecting device 1 includes the first encoder 12, the second encoder 17, the inertial sensor 21, the arithmetic processing module 19, the first motor 11, and the second motor 16, and further includes a storage module 23 and an input/output control module 24.

As the arithmetic processing module 19, a CPU specialized for this embodiment, or such as a general-purpose CPU, an embedded CPU is used, and a time measuring means, such as a clock generator, is built in the arithmetic processing module 19. Further, as the storage module 23, a semiconductor memory, such as a RAM or a ROM, is used.

The storage module 23 stores various types of programs. These programs include an arithmetic program for detecting a tilt and rotation of the inertial sensor unit 4 with respect to the outer frame 2, a program for eliminating an offset and a drift of the inertial sensor 21, and a program for driving and controlling the first motor 11 and the second motor 16. Further, the storage module 23 stores various types of data such as arithmetic data (that is, detected acceleration data, tilt angle data, angular velocity data and rotation angle data).

The input/output control module 24 drives the first motor 11 and the second motor 16 based on a control command output from the arithmetic processing module 19 and outputs data regarding a tilt angle data and a rotation calculated by the arithmetic processing module 19 as a detection signal.

The arithmetic processing module 19 develops the above-described stored programs and performs a calculation processing as required. Further, the arithmetic processing module 19 calculates a tilt angle and a tilt direction based on a detection result from the acceleration sensor of the inertial sensor 21 by being associated with a rotation angle detected by the first encoder 12 and a rotation angle detected by the second encoder 17, and also calculates a rotation angle based on a detection result from the gyro sensor of the inertial sensor 21.

It is to be noted that, the outer frame 2 and the inertial sensor 21 are mechanistically associated each other by an output of the first encoder 12 and an output of the second encoder 17, and are set to indicate a rotation angle from a predetermined reference angle (for instance, 0° of rotation angles).

Meanwhile, the inertial sensor 21 (the acceleration sensor and the gyro sensor) includes a manufacturing offset and is subject to a drift due to environmental changes (such as temperature, atmospheric pressure, humidity) or temporal changes.

A description will be given below on an elimination of an offset and a drift of a rotational operation type inertia detecting device 1 in this embodiment.

FIG.3 is a diagram schematically showing the inertial sensor 21 extracted from FIG.1.

In FIG.3, an X-axis corresponds to the first shaft 5 and a Y-axis corresponds to the second shaft 7, and a vertical axis with respect to a plane including an X-axis and a Y-axis corresponds to a Z-axis. Further, a rotation around an X-axis corresponds to pitching, a rotation around a Y-axis corresponds to rolling, and a rotation around a Z-axis corresponds to yawing.

Further, arrows x, y and z shown in the inertial sensor 21 indicate accelerating directions detected by the acceleration sensor of the inertial sensor 21, and x, y and z respectively correspond X, Y and Z-axes, and the acceleration sensor outputs acceleration signals respectively corresponding to three axes. Further, arrows $\varphi$, $\kappa$ and $\gamma$ indicate rotation directions detected by the gyro sensor of the inertial sensor 21, and the gyro sensor outputs angular velocity signals of pitching ($\varphi$), rolling ($\kappa$) and yawing ($\gamma$). It is to be noted that, acceleration and angular velocity output by the inertial sensor 21 mean acceleration and angular velocity output by the inertial sensor unit 4.

In the present embodiment, since a motor and an encoder are coupled to each of X-axis and Y-axis, it is possible to forcibly and accurately reverse the inertial sensor unit 4 by 180° or to continuously rotate with respect to each of an X-axis and a Y-axis. Further, a reversal and a rotation are set to speeds sufficiently faster than that of environmental changes so as not to be affected by environmental changes. For instance, the inertial sensor unit 4 is reversed or continuously rotated at least once per 10 seconds.

FIG.4A, FIG.4B, FIG.4C, and FIG.4D show posture states of the inertial sensor 21 with respect to the target device.

FIG.4A shows a state when starting an operation of the inertial sensor 21, and at the starting time, outputs of the first encoder 12 and the second encoder 17 (a rotation angle around an X-axis, a rotation angle around a Y-axis) and outputs of the inertial sensor 21 (acceleration sensor: x, y, z, gyro sensor: $\varphi$, $\kappa$, $\gamma$) are measured.

Next, when the inertial sensor 21 pitching-reverses by 180° around an X-axis (FIG.4B) and further rolling-reverses by 180° around a Y-axis (FIG.4C), a front and a rear, and a right and a left of the inertial sensor unit 4 are reversed. Next, when the inertial sensor 21 pitching-reverses by 180° around an X-axis (FIG.4D) and further rolling-reverses by 180° around a Y-axis, the inertial sensor 21 returns to an original posture state (posture state when starting the operation) (FIG.4A).

FIG.4C shows a posture state of the inertial sensor 21 reversed in two axes (X-axis and Y-axis) from a posture state of the inertial sensor 21 shown in FIG.4A.

With respect to an acceleration sensor of the inertial sensor 21, when the inertial sensor 21 is biaxially reversed and a difference between outputs of the acceleration sensor of the inertial sensor 21 before and after the biaxial reversal operation is taken, an offset and a long-term drift component of the acceleration sensor are eliminated, and a two-fold tilt angle difference due to an output difference of the acceleration sensor is acquired. Here, a long-term drift means a drift caused by temporal changes in a structure, and environmental changes such as temperature and atmospheric pressure.

Next, with respect to the gyro sensor, by taking a difference of $\varphi$ and $\gamma$ of the gyro sensor of the inertial sensor 21 before and after a reversal operation in a reversal operation from a posture state shown in FIG. 4A to a posture state shown in FIG. 4B, a difference of $\kappa$ and $\gamma$ of the gyro sensor before and after a reversal operation in a reversal operation from a posture state shown in FIG.4B to a posture state shown in FIG.4C, a difference of $\varphi$ and $\gamma$ of the gyro sensor before and after a reversal operation in a reversal operation from a posture state shown in FIG.4C to a posture state shown in FIG.4D, and a difference of $\kappa$ and $\gamma$ of the gyro sensor before and after a reversal operation in a reversal operation from a posture state shown in FIG. 4D to a posture state shown in FIG.4A, it is possible to eliminate an offset and a long-term drift component for each of $\varphi$, $\kappa$, and $\gamma$ of the gyro sensor, and to obtain a two-fold angular velocity. It is to be noted that, an average value before and after a reversal operation means an offset and a long-term drift component.

As described above, by a difference before and after a reversal operation, an offset and a long-term drift component are eliminated with regard to each of the acceleration sensor and the gyro sensor of the inertial sensor 21, and two-fold detection sensitivity is obtained.

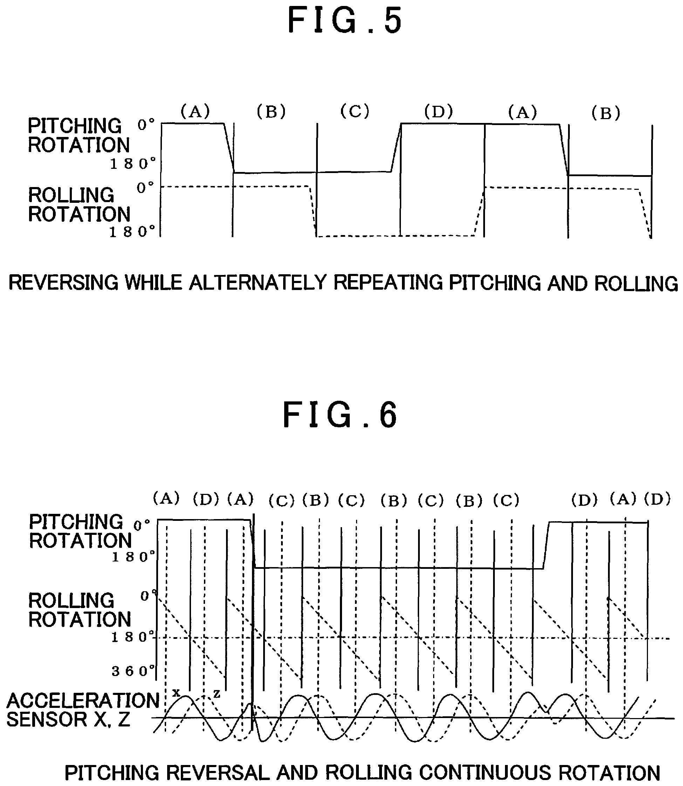

FIG.5 shows pitching reversal operations and rolling reversal operations shown in FIG.4 on a time-series basis, and shows an example of alternately repeating pitching reversal operations and rolling reversal operations (biaxial switching reversal operation).

The above-description has described that pitching reversal operations and rolling reversal operations are intermittently repeated and an offset and a long-term drift component are eliminated, but it is also possible to eliminate an offset and a long-term drift component by performing intermittent reversal operation of any one of pitching (X-axis) or rolling (Y-axis) and continuous rotation of the other.

FIG.6 shows an example of performing switching reversal operations with respect to pitching (rotating around an X-axis) and performing continuous rotation operations at constant speed with respect to rolling (rotating around a Y-axis).

In FIG.6, with respect to pitching and rolling, angular changes are respectively detected by the first encoder 12 and the second encoder 17.

Due to a continuous rotation of rolling at constant speed, outputs x and z of the acceleration sensor become sinusoidal outputs from which a phase is deviated by approximately 90°.

In FIG.6, an output x of an acceleration sensor is shown by a solid sine wave and an output z of an acceleration sensor is shown by a dashed sine wave. The arithmetic processing module 19 is capable of determining (maximum position-minimum value) /2 of each of outputs x and z of the acceleration sensor, and a position of (maximum position-minimum value)/2 indicates a horizontal position with respect to rolling.

Further, sine waves of outputs x and z of the acceleration sensor are reversed by switching reversal operations of pitching (180° rotation). With respect to the acceleration sensor output y, the arithmetic processing module 19 compares values before and after switching reversal, and it is possible to eliminate an offset and a long-term drift component of the output y, or to obtain a correction value of the output y.

Therefore, the arithmetic processing module 19 controls pitching such that the acceleration sensor output y is 0. That is, the arithmetic processing module 19 controls the first motor 11 such that a Y-axis becomes horizontal (including a substantially horizontal state). Furthermore, the arithmetic processing module 19 reverses pitching by 180° based on an output of the first encoder 12 and determines the offset of the output y (1/2 of an average of the outputs y before and after reversal), and corrects a horizontal value of pitching.

The arithmetic processing module 19, by detecting an angle of the second encoder 17 at a point of (maximum position-minimum value) /2 of outputs x and z of the acceleration sensor, is capable of determining a tilt angle of the inner frame 3 with respect to horizontality (tilt angle of an X-axis with respect to horizontality) from a rolling continuous rotation at a constant speed.

Further, with regard to a gyro sensor, the arithmetic processing module 19 obtains differences (reversal differences Δκ and Δγ) respectively at a time of 180° reversal with respect to outputs κ and γ of the gyro sensor of the inertial sensor 21 based on a detection output of the second encoder 17. Further, the arithmetic processing module 19, by performing vector synthesis of the reversal differences Δκ and Δγ, is capable of eliminating an offset and a long-term drift component of the gyro sensor, and of obtaining pitching angular velocity and yawing angular velocity with twice detection sensitivity, and of obtaining a rotation angle through time integration.

Since a Y-axis of the inner frame 3 is controlled to become horizontal (that is, the inner frame 3 is controlled to become horizontal) based on a signal from the inertial sensor 21, it is possible to detect a horizontal rotation without being affected by horizontal changes of the outer frame 2.

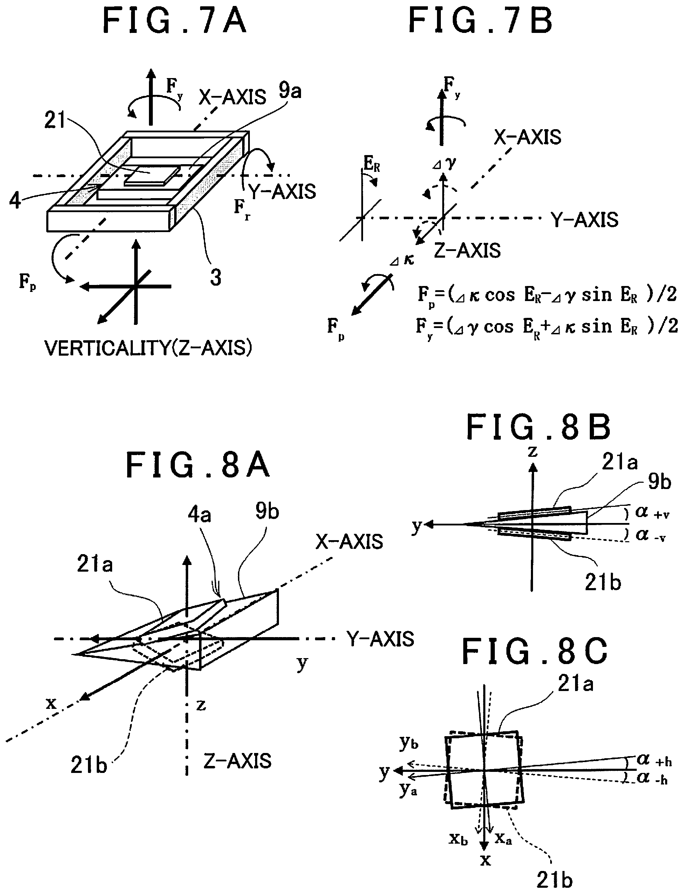

FIG.7 shows a relationship between a tilt and a horizontal rotation of the inner frame in a state where a Y-axis of the inner frame 3 is horizontally leveled based on an output of the inertial sensor unit 4.

FIG.7A shows a relationship between a tilt (pitching Fp, rolling Fr) and a horizontal rotation (yawing Fy) of the inner frame with respect to verticality.

FIG.7B shows an example of a vector synthesis of reversal differences Δκ and Δγ with regard to gyro sensor outputs κ and γ of the inertial sensor 21. Accuracy of detection ER of the second encoder 17 is accurate and thus an angular velocity indicated by an accurate vector synthesis (pitching Fp, yawing Fy) is obtained.

[Equation 1]

$$F_p = ( _\varDelta \kappa \cos E_R - _\varDelta \gamma \sin E_R )/2$$
$$F_y = ( _\varDelta \gamma \cos E_R + _\varDelta \kappa \sin E_R )/2$$

A keeping state of pitching horizontal leveling (state where a Y-axis is horizontally maintained) enables detection of a horizontal position (detection of a rolling horizontal position) during rolling constant-speed continuous rotation, and it is possible for the arithmetic processing module 19 to determine a posture (a tilt angle, a tilt direction) of the outer frame 2 with respect to horizontal based on a detection angle of the first encoder 12 and a detection angle of the second encoder 17 when detecting this horizontal position (that is, the inertial sensor 21 is in a horizontal state). Further, it is possible to determine a horizontal rotation (rotation around a Z-axis) based on a gyro output from the gyro sensor.

Here, a gyro sensor detects a rotational change in inertial space, meanwhile an acceleration sensor detects a tilt on a ground. Further, it is possible for both a gyro sensor and an acceleration sensor to detect a tilt change.

A rolling horizontal position detection during rolling constant-speed continuous rotation in a pitching horizontal leveling keeping state equivalently enables rotation detection by a gyro sensor in a horizontal state, and a stable horizontal rotation detection (yawing Fy) is obtained. It is to be noted that, a rolling rotation in this case also serves as a removing function of an offset and a long-term drift component of the inertial sensor 21 and as a detecting function of a rolling horizontal position.

It is to be noted that, this method (rolling horizontal position detection during pitching horizontal leveling keeping and rolling constant-speed continuous rotation) can also be applied while moving by performing reversal of the acceleration sensor output y and the pitching correction arithmetic when the outer frame 2 is stationary (or at constant velocity). For instance, horizontal control of pitching while moving is constantly controlled using rotation detection of pitching based on a gyro sensor output instead of the acceleration sensor output y. Further, the arithmetic processing module 19 is capable of determining whether a stationary state or a movement state based on an output from the inertial sensor 21.

By the way, when the inertial sensor unit 4 is continuously rotated at a constant speed with respect to a second shaft 7, in order to prevent an effect of the constant-speed continuous rotation from affecting a rotation vector (pitching Fp and yawing Fy) detected based on the gyro sensor outputs κ and γ, it is necessary to make detection axes of the gyro sensors κ and γ as perpendicular as possible with respect to the second shaft.

FIG.8 shows an inertial sensor unit configured to prevent a negative effect during a constant-speed continuous rotation of the inertial sensor unit 4, to double detection sensitivity, and to eliminate a negative effect due to mechanical rotation irregularities.

The inertial sensor unit includes even number (two in FIG. 8) of inertial sensors 21a and 21b, and the inertial sensors 21a and 21b are arranged opposite each other at a predetermined angle with respect to a second shaft 7. A description will be given below on an inertial sensor unit including two inertial sensors 21a and 21b as a twin inertial sensor unit 4a.

FIG.8A shows a perspective diagram of the twin inertial sensor unit 4a, FIG. 8B shows a front top view diagram of the same, and FIG.8C shows a front side view diagram of the same.

The twin inertial sensor unit 4a is composed of a first inertial sensor 21a, a second inertial sensor 21b, and a wedge-shaped sensor base 9b. The wedge-shaped sensor base 9b is accurately opposed to the second shaft 7 (Y-axis), a first inertial sensor 21a and a second inertial sensor 21b are attached to front-back both surfaces of the wedge-shaped sensor base 9b, inversely facing each other, the first and second inertial sensors 21a and 21b respectively form tilts of $\alpha$+v and $\alpha$-v with respect to the second shaft (that is, Y-axis) (see FIG. 8B) and are attached so as to respectively form lateral deflections of $\alpha$+h and $\alpha$-h with respect to a Z-axis of the twin inertial sensor unit 4a (see FIG. 8C).

Here, $\alpha$+v is approximately equal to $\alpha$-v, and $\alpha$+h and $\alpha$-h are also set to approximately the same each other.

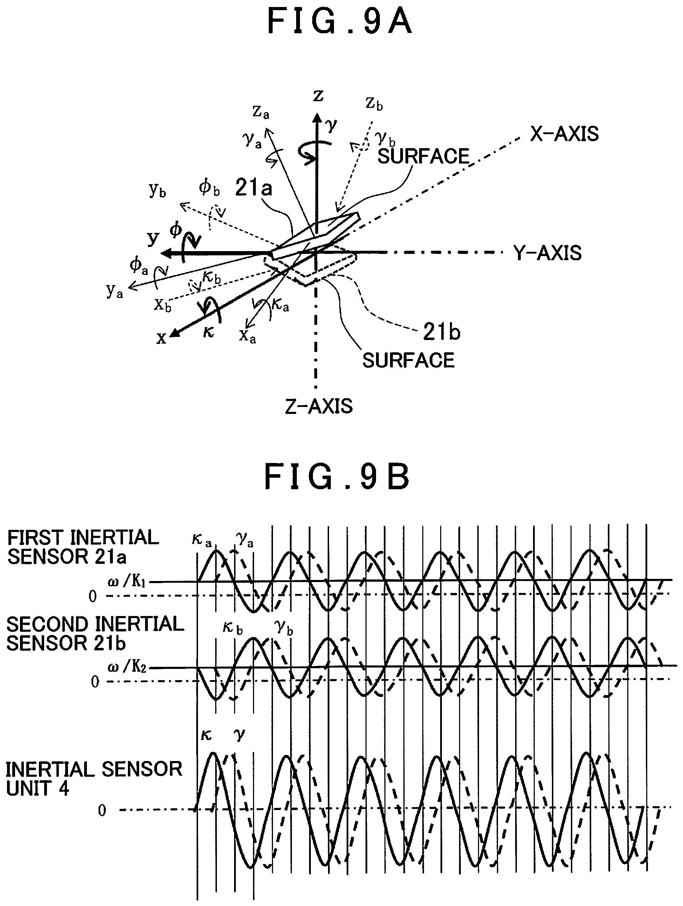

FIG.9A is a diagram showing acceleration detection vectors and gyro rotation detection vectors with respect to an X-axis, a Y-axis and a Z-axis, and also shows a relationship between acceleration sensor outputs xa, ya, and za and gyro sensor output $\varphi$a, $\kappa$a and $\gamma$a of the first inertial sensor 21a, and acceleration sensor outputs xb, yb and zb and gyro sensor outputs $\varphi$b, $\kappa$b and $\gamma$b of the second inertial sensor 21b.

The above-described offset of each gyro sensor is classified into an offset due to manufacturing and an offset fluctuation due to an environmental change. An offset of each gyro sensor due to manufacturing is obtained, for instance, by detecting each gyro sensor output in a stationary state where the constant-speed continuous rotation is stopped, and is eliminated from the constant-speed continuous rotation.

Further, since offset fluctuations due to environmental changes are generally very small, an arrangement of the first inertial sensor 21a and the second inertial sensor 21b with respect to the wedge-shaped sensor base 9b (see FIG.8C), and a tilt of the first inertial sensor 21a and the second inertial sensor 21b (that is, tilts of front and back surface of the wedge-shaped sensor base 9b (apex angle of a wedge) (see FIG. 8B) are set to be large enough such that magnitude of an effect due to the constant-speed continuous rotation is able to ignore offset fluctuations due to environmental changes.

FIG.9B shows a relationship between a gyro sensor output ($\kappa$a, $\gamma$a) of the first inertial sensor 21a and a gyro sensor output ($\kappa$b, $\gamma$b) of the second inertial sensor 21b, where $\omega$ is an angular velocity of the constant-speed continuous rotation, and K1 is a magnification indicating a degree of influence of a tilt $\alpha$+v of the first inertial sensor 21a on a gyro sensor output ($\kappa$a) of the first inertial sensor 21a, and is expressed as K1=sin($\alpha$+v).

Further, K2 is a magnification indicating a degree of influence of a tilt $\alpha$-v of the second inertial sensor 21b on a gyro sensor output ($\kappa$b) of the second inertial sensor 21b, and is expressed as K2=sin($\alpha$-v) (it is to be noted that K1 and K2 are mostly determined during a manufacturing stage). Further, the same is applied to a gyro sensor output ($\gamma$a) of the first inertial sensor 21a and a gyro sensor output ($\gamma$b) of the second inertial sensor 21b, although not explicitly specified.

In FIG.9B, $\omega$/K 1 and $\omega$/K 2 are steady angular velocities of the first inertial sensor 21a and the second inertial sensor 21b (in a state where there is no rotation along a Z-axis). Further, in FIG.9B, waveforms of $\kappa$a, $\gamma$a, $\kappa$b, and $\gamma$b indicate a time when there is a rotation along the Z-axis (Fy in FIG.7).

As shown in FIG.9B, as for detected angular velocities $\kappa$ and $\gamma$ as an inertial sensor unit 4, by taking a difference between an output of the first inertial sensor 21a and an output of the second inertial sensor 21b, steady angular velocities are eliminated and waveforms are doubled. This improves an S/N ratio of the detected angular velocity by a factor of $\sqrt{2}$ due to an average effect.

It is to be noted that a periodic fluctuation of $\omega$ due to mechanical rotation irregularities affects the first inertial sensor 21a and the second inertial sensor 21b at the same fluctuation ratio, and therefore is offset by taking the difference.

Further, angular velocity $\omega$ of a constant-speed continuous rotation is accurate by being managed by the second encoder 17 and a time measuring means built in the arithmetic processing module 19, and magnifications K1 and K2 with respect to $\kappa$a and $\kappa$b are stable (determined at a manufacturing stage) , and therefore it is possible to evaluate and measure $\omega$/K 1 and $\omega$/K 2 and to acquire K1 and K2 as calibration values. It is to be noted that the same is applied to $\gamma$a and $\gamma$b, although not explicitly specified.

It is to be noted that, for convenience of explanation, a constant-speed continuous rotation has been described, but since a rotation angle is managed by a second encoder 17, merely a continuous rotation may be sufficient.

By taking an average in consideration of a direction of a detection vector, a detected acceleration is obtained.

With reference to FIG.9A, from acceleration detection vectors with respect to an X-axis, a Y-axis, and a Z-axis, a detected acceleration y is (ya+yb)/2, a detected acceleration x is (xa-xb)/2, and a detected acceleration z is (za-zb)/2.

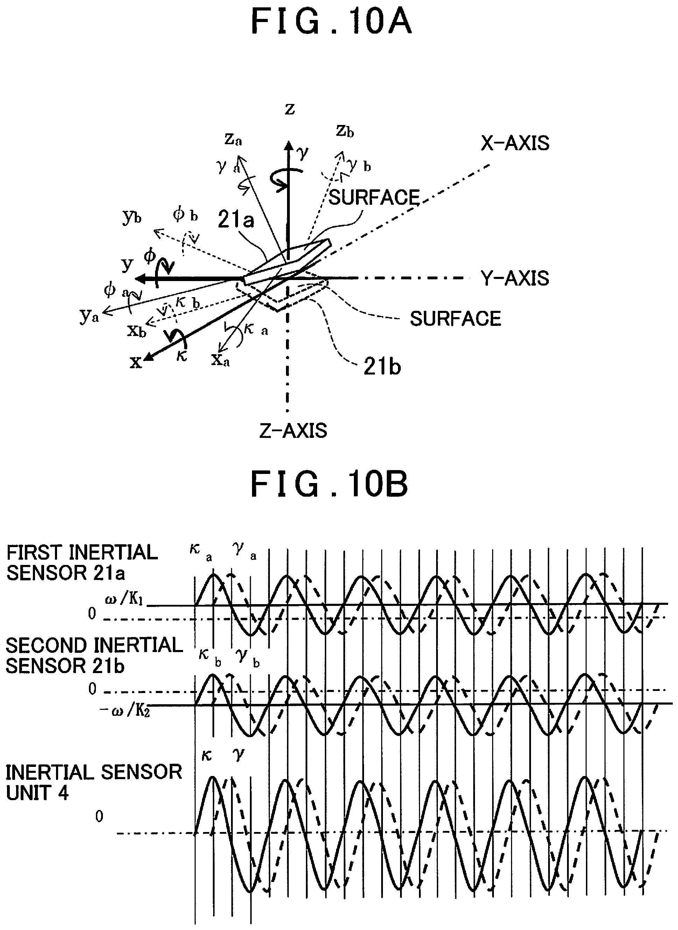

FIG.9 shows an example in which the first inertial sensor 21a and the second inertial sensor 21b are attached inversely facing each other ( surfaces of both sensors inverted up and down) on front-back both surfaces of the wedge-shaped sensor base 9b, but this is not limited to inversely facing, and it is also possible without inverting the surfaces of both sensors. FIG.10 shows a modified example of FIG.9, which is an example of calculation in which sensors are attached to front-back both surfaces of the wedge-shaped sensor base 9b without being inverted, and a direction of a detection vector is taken into consideration (surfaces of both sensors face up).

In this case, directions of $\gamma$b and $\kappa$b change with respect to FIG.9A, and it becomes an acceleration detection vector and gyro rotation detection vector as shown in FIG.10A. As for detected angular velocities $\kappa$ and $\gamma$ as the inertial sensor unit 4, by taking a sum (difference in FIG.9) between an output of the first inertial sensor 21a and an output of the second inertial sensor 21b, steady angular velocities are eliminated and waveforms are doubled. The waveforms at this case is shown in FIG.10B.

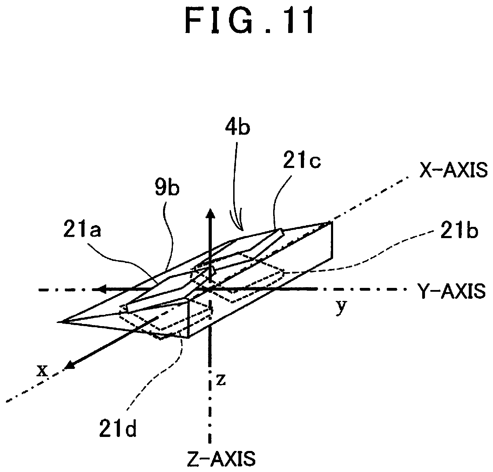

FIG.11 shows a twin inertial sensor unit 4b composed of a plurality of sets (for instance, two sets) of twin inertial sensor units.

The twin inertial sensor unit 4b has four inertial sensors 21a, 21b, 21c, and 21d, and includes two sets of twin inertial sensor units 4a composed of two inertial sensors (21a, 21b, or 21c, 21d) inversely facing at a predetermined angle with respect to a second shaft 7 (Y-axis). The twin inertial sensor unit 4b having two sets of twin inertial sensor units 4a further improves detection sensitivity compared to the above-described twin inertial sensor unit 4b.

In the drawing, each of detected angular velocities $\kappa$ and $\gamma$ and detected acceleration x, y and z obtained by the inertial sensor 21a and the inertial sensor 21b, and detected angular velocities $\kappa$ and $\gamma$ and detected acceleration x, y and z obtained by the inertial sensor 21c and the inertial sensor 21d is input to the arithmetic processing module 19. By performing average processing of each of the detected angular velocities $\kappa$ and $\gamma$ and the detected accelerations x, y, and z, the arithmetic processing module 19 improves an S/N ratio of detected angular velocities and detected accelerations by a factor of $\sqrt{2}$ due to an averaging effect.

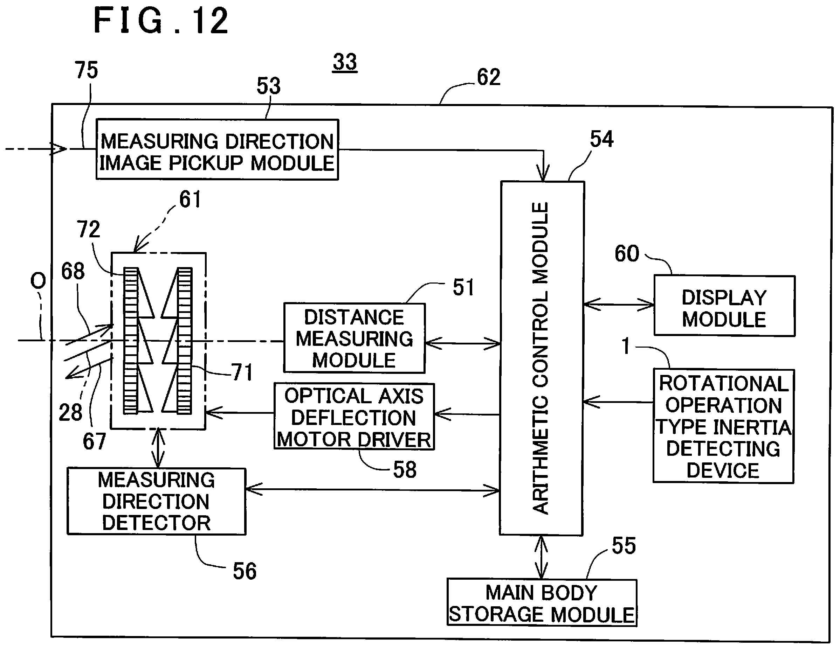

Next, a description will be given on a surveying instrument 33 including the rotational operation type inertia detecting device 1 by referring to FIG.12. It is to be noted that mounting of the surveying instrument 33 on a tripod, a mobile vehicle, and a flight vehicle, is applied, depending on uses.

The surveying instrument 33 mainly includes a distance measuring module 51, a measuring direction image pickup module 53, an arithmetic control module 54, a main body storage module 55, the rotational operation type inertia detecting device 1, a measuring direction detector 56, an optical axis deflection motor driver 58, a display module 60, and an optical axis deflector 61. These are accommodated and integrated in a casing 62.

Further, the outer frame 2 of the rotational operation type inertia detecting device 1 is fixed to the casing 62 or fixed to a structural member fixed to the casing 62, and is integrated with the casing 62, that is, the surveying instrument 33.

As the arithmetic control module 54, such as a CPU specialized for the present embodiment, a general-purpose CPU or a built-in CPU is used, and a time measuring means is built in the arithmetic control module 54. Further, as the main body storage module 55, a semiconductor memory or the like is used. Further, a part of functions of the arithmetic control module 54 may be assigned as the arithmetic processing module 19.

In the main body storage module 55, various types of programs are stored. These programs include programs for performing the present embodiment, for instance, a distance measurement program, an image processing program, and an optical axis deflection control program, programs for performing a calibration of the rotational operation type inertia detecting device 1, and programs for data processing. The arithmetic control module 54 develops and performs the stored programs. Further, in the main body storage module 55, various kinds of data, such as measurement data and an image data are stored.

The arithmetic control module 54 controls the optical axis deflector 61 via the optical axis deflection motor driver 58. Further, the arithmetic control module 54 controls a deflection of a distance measuring optical axis 28 via the optical axis deflector 61, and performs synchronous control of the distance measuring module 51 and the measuring direction image pickup module 53, and substantial synchronization (timing matching) with regard to measurement and control of the rotational operation type inertia detecting device 1, and the like.

The optical axis deflector 61 is arranged on the distance measuring optical axis 28. A straight optical axis transmitting through a center of the optical axis deflector 61 is a reference optical axis O. The reference optical axis O coincides with the distance measuring optical axis 28 when not deflected by the optical axis deflector 61, and has a predetermined relationship with respect to the casing 62.

It is to be noted that, as the optical axis deflector 61, optical axis deflectors disclosed in Patent Document 2, Patent Document 3, and Patent Document 4 are capable of applying.

Brief description will be given below on the optical axis deflector 61.

The optical axis deflector 61 includes a pair of disk prisms 71 and 72 composed of optical prisms. The disk prisms 71 and 72 are disk-shaped (or polygonal circumscribing a circle), each having the same diameter, and are disposed orthogonally and concentrically with respect to the distance measuring optical axis 28 on the distance measuring optical axis 28, in parallel to each other at a predetermined interval. The disk prisms 71 and 72 are provided rotatably around the reference optical axis O, respectively. Each of the disk prisms 71 and 72 is configured to be individually and independently rotated by motors, respectively. The motors are driven by the optical axis deflection motor driver 58, and configured such that, via the optical axis deflection motor driver 58, a rotation angle, a rotation direction, a rotation speed of the disk prisms 71 and 72 are controlled by the arithmetic control module 54. Thus, controlling rotations of the disk prisms 71 and 72 enables the distance measuring optical axis 28 to deflect at any angles from 0° to the maximum deflection angle (for instance, ±30°) with reference to the reference optical axis O.

The distance measuring module 51 has a function as an electronic distance meter, projects a distance measuring light 67 to a measuring point or a measuring target, receives a reflected distance measuring light 68 from the measuring point or the measuring target, and performs electronic distance measurement based on a round trip time (flight time) of the distance measuring light.

By constant-speed continuous rotating the disk prisms 71 and 72 at a predetermined rotation ratio, while continuously irradiating with the distance measuring light 67, it is possible to scan the distance measuring light 67 in a two-dimensional pattern.

The measuring direction detector 56 detects a rotation angle of each of the disk prisms 71 and 72, and detects a measuring direction of the distance measuring optical axis 28, that is, a deflection angle and a deflecting direction of the distance measuring optical axis 28 with respect to the reference optical axis O in real time. Therefore, it is possible to detect (perform angle measurement of) an angle and a direction of the distance measuring optical axis 28 with respect to the reference optical axis O during distance measuring.

A measuring direction detection result (angle measurement result) is associated with a distance measuring result and is input into the arithmetic control module 54, and the arithmetic control module 54 associates and stores a distance measuring result, an angle measurement result and a detection result of the rotational operation type inertia detecting device 1 in the main body storage module 55.

The measuring direction image pickup module 53 has a known relationship with the reference optical axis O, that is, an image pickup optical axis 75 of the measuring direction image pickup module 53 is parallel to the reference optical axis O and a distance between optical axes is known. Further, the measuring direction image pickup module 53 is a camera with a field angle larger than a maximum deflection angle (for instance, ±30°) of the optical axis deflector 61 and acquires image data including a maximum deflection range by the optical axis deflector 61. Further, the measuring direction image pickup module 53 is capable of acquiring a moving image or continuous image.

An image pickup element of the measuring direction image pickup module 53 is a CCD or a CMOS sensor, which is an aggregation of pixels, and it is possible to identify a position of each pixel on an image element. For instance, each pixel has pixel coordinates in a coordinate system with the image pickup optical axis 75 as an origin, and its position on an image element is identified by the pixel coordinates.

The arithmetic control module 54 determines a tilt angle (vertical angle) and a horizontal rotation angle with respect to horizontality of the reference optical axis O and the image pickup optical axis 75 of the measuring direction image pickup module 53, based on a detection result of the rotational operation type inertia detecting device 1. As a result, it is also possible to determine horizontal reference three-dimensional coordinates of the point cloud data along the scan locus, and is also possible to associate the pixel coordinates.

The display module 60 displays an image acquired by the measuring direction image pickup module 53, the scan locus, a measurement state, a measurement result, and the like. It is to be noted that, the display module 60 may be used as a touch panel that also serves as an operation module.

The surveying instrument 33 described above may further provide a collimation function (narrow-angle image pickup), and may acquire an image of a measuring point, and may determine a tilt angle (vertical angle) and a horizontal rotation angle of the measuring point with respect to horizontal based on a detection result of the rotational operation type inertia detecting device 1.

In the surveying instrument 33 described above, although a tilt with respect to a horizontal and a horizontal rotation angle are obtained from a detection result of the rotational operation type inertia detecting device 1 and a distance is acquired from a distance measuring result of a distance measuring module 51, with regard to positional information of the surveying instrument 33, a GNSS may be provided in the surveying instrument 33, and the positional information from the GNSS and a detection result of a rotational operation type inertia detecting device 1 may be combined with each other.

LEGEND OF REFERENCE NUMERALS

| | |
|---|---|
| 1 | Rotational operation type inertia detecting device |
| 2 | Outer frame |
| 3 | Inner frame |
| 4, 4a, 4b | Twin inertial sensor unit |
| 9a, 9b | Sensor base |
| 11 | First motor |
| 12 | First encoder |
| 16 | Second motor |
| 17 | Second encoder |
| 19 | Arithmetic processing module |
| 21 | Inertial sensor |
| 21a | First inertial sensor |
| 21b | Second inertial sensor |
| 23 | Storage module |
| 33 | Surveying instrument |
| 51 | Distance measuring module |
| 53 | Measuring direction image pickup module |

| 54 | Arithmetic control module |
|----|----|
| 55 | Main body storage module |
| 61 | Optical axis deflector |

**Claims**

1. A rotational operation type inertia detecting device comprising:

   an inner frame provided inside an outer frame, an inertial sensor unit configured to detect a tilt with respect to horizontality and a rotation provided inside said inner frame, wherein said inner frame is rotatably supported to said outer frame via a first shaft, said inertial sensor unit is rotatably supported to said inner frame via a second shaft orthogonal to said first shaft, said inertial sensor unit is a twin inertial sensor unit including two inertial sensors, and said two inertial sensors face each other at a predetermined angle with respect to said second shaft, a first encoder provided on said first shaft and configured to detect a rotation angle between said outer frame and said inner frame, a second encoder provided on said second shaft and configured to detect a rotation angle between said inner frame and said twin inertial sensor unit, a rotary power provided for each shaft so as to rotate each shaft, and an arithmetic processing module configured to drive and control said each rotary power based on a detection result from said twin inertial sensor unit, wherein said arithmetic processing module is configured to associate a signal output by said twin inertial sensor unit with outputs of said first encoder and said second encoder, to continuously rotate said twin inertial sensor unit with respect to said second shaft, to calculate a horizontal rotation angle of said inner frame and a rotation angle with respect to horizontality of said second shaft from a detection signal of said twin inertial sensor unit based on an angle of said second encoder, to reverse said inner frame at least once by 180° or one rotation with respect to said first shaft, and to detect a tilt angle (vertical angle) and a horizontal rotation angle with respect to verticality of said outer frame.

2. The rotational operation type inertia detecting device according to claim 1, wherein said arithmetic processing module is configured to control said rotary power provided on said first shaft such that said inner frame becomes horizontal based on a detection signal of said twin inertial sensor unit.

3. The rotational operation type inertia detecting device according to claim 1, wherein said rotational operation type inertia detecting device is configured to reverse said inner frame at least once by 180° or one rotation with regard to said first shaft while said outer frame is in a stationary state or a constant velocity state, to detect a vertical angle and a horizontal rotation angle based on detection signals output by said twin inertial sensor unit before and after reversal, and when said outer frame is moving, to calculate a vertical angle and a horizontal rotation angle according to changes of rotation detection results of said twin inertial sensor unit with reference to said vertical angle and said horizontal rotation angle.

4. The rotational operation type inertia detecting device according to claim 1, wherein said inertial sensor unit includes a plurality of said twin inertial sensor units, and said arithmetic processing module is configured to perform average processing of results acquired by each twin inertial sensor unit.

5. A surveying instrument comprising: said rotational operation type inertia detecting device according to any one of claims 1 to 4, a distance measuring module configured to perform electronic distance measurement, an optical axis deflector configured to deflect a distance measuring optical axis and to direct a distance measuring light to a measuring point, and a measuring direction detector configured to detect a direction of said distance measuring optical axis, wherein said surveying instrument is configured to calculate a position of said measuring point.

# FIG.1

# FIG.2

FIG.2 Block diagram showing: FIRST ENCODER (12), SECOND ENCODER (17), INERTIAL SENSOR (21) feeding into ARITHMETIC PROCESSING MODULE (19); STORAGE MODULE (23); INPUT/OUTPUT CONTROL MODULE (24); outputs (11), (16), and DETECTION SIGNAL. Overall system (1).

EP 4 597 033 A1

# FIG.3

PITCHING

X-AXIS

21

Y-AXIS

ROLLING

YAWING

Z-AXIS

# FIG.4A

X-AXIS

21

Y-AXIS

# FIG.4B

21

X-AXIS

Y-AXIS

ROTATE 180° AROUND X-AXIS

# FIG.4C

X-AXIS

Y-AXIS

21

ROTATE 180° AROUND Y-AXIS

# FIG.4D

X-AXIS

Y-AXIS

21

ROTATE 180° AROUND X-AXIS

# FIG.5

REVERSING WHILE ALTERNATELY REPEATING PITCHING AND ROLLING

# FIG.6

PITCHING REVERSAL AND ROLLING CONTINUOUS ROTATION

# FIG.7A

# FIG.7B

$$F_p = (\Delta\kappa\cos E_R - \Delta\gamma\sin E_R)/2$$
$$F_y = (\Delta\gamma\cos E_R + \Delta\kappa\sin E_R)/2$$

# FIG.8A

# FIG.8B

# FIG.8C

# FIG.9A

# FIG.9B

# FIG.10A

# FIG.10B

# FIG.11

# FIG.12

EP 4 597 033 A1

## INTERNATIONAL SEARCH REPORT

| International application No. |
| --- |
| **PCT/JP2023/034633** |

### A. CLASSIFICATION OF SUBJECT MATTER

***G01C 9/06***(2006.01)i; ***G01C 15/00***(2006.01)i; ***G01C 19/00***(2013.01)i; ***G01B 7/30***(2006.01)i
FI: G01C9/06 E; G01B7/30 Z; G01C15/00 105S; G01C19/00 Z

According to International Patent Classification (IPC) or to both national classification and IPC

### B. FIELDS SEARCHED

Minimum documentation searched (classification system followed by classification symbols)

G01C9/06; G01C15/00; G01C19/00; G01B7/30; G01C21/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 4-142088 A (TOKIMEC INC.) 15 May 1992 (1992-05-15)<br>entire text | 1-5 |
| A | CN 208998806 U (SHANDONG ZHIYI AVIATION TECHNOLOGY CO., LTD.) 18 June 2019 (2019-06-18)<br>entire text | 1-5 |
| A | JP 2021-63761 A (KABUSHIKI KAISHA TOPCON) 22 April 2021 (2021-04-22)<br>entire text | 1-5 |
| A | WO 2021/152884 A1 (SONY GROUP CORP.) 05 August 2021 (2021-08-05)<br>entire text | 1-5 |
| A | JP 2007-155584 A (JAPAN AGENGY FOR MARINE-EARTH SCIENCE & TECHNOLOGY) 21 June 2007 (2007-06-21)<br>entire text | 1-5 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 October 2023** | **14 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/034633** |

| Patent document cited in search report | | | Publication date (day/month/year) | Patent family member(s) | | | Publication date (day/month/year) |
| --- | --- | --- | --- | --- | --- | --- | --- |
| JP | 4-142088 | A | 15 May 1992 | (Family: none) | | | |
| CN | 208998806 | U | 18 June 2019 | (Family: none) | | | |
| JP | 2021-63761 | A | 22 April 2021 | US entire text | 2021/0116241 | A1 | |
| WO | 2021/152884 | A1 | 05 August 2021 | US entire text | 2023/0048524 | A1 | |
| JP | 2007-155584 | A | 21 June 2007 | (Family: none) | | | |

Form PCT/ISA/210 (patent family annex) (January 2015)

**EP 4 597 033 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6541365 B
- JP 2016151423 A
- JP 2017090244 A
- JP 2017106813 A
- JP 2018028464 A
- JP 2021050991 A